# EUROPEAN PATENT APPLICATION

(11) **EP 3 125 187 A1**
(43) Date of publication of application: **01.02.2017**
(21) Application number: 16181037.9
(22) Date of filing: 25.07.2016
(51) Int. Cl.: G06Q 50/00

(54) **METHOD AND APPARATUS FOR RECOMMENDING CONTACT INFORMATION**

(30) Priority: 30.07.2015 CN 201510459792
(71) Applicant: Xiaomi Inc., Beijing 100085 (CN)
(72) Inventor: ZHANG, Tao, Haidian District, Beijing 100085 (CN); WANG, Baichao, Haidian District, Beijing 100085 (CN); HOU, Wendi, Haidian District, Beijing 100085 (CN)
(74) Representative: Sadler, Peter Frederick

(57) **Abstract**

The present disclosure, pertaining to the field of terminal technologies, relates to a method and apparatus for recommending contact information. The method includes: determining (101) an age of a mobile terminal owner; determining (102), based on the age of the mobile terminal owner and stored contact photos of a plurality of contacts, a candidate contact from the plurality of contacts; and upon receiving a share instruction with respect to a designated image, recommending (103) contact information of the candidate contact, the designated image being any one image in a photo album to be shared. According to the present disclosure, one or more candidate contacts are determined from a plurality of contacts, and upon receipt of a share instruction with respect to a designated image, contact information of the candidate contact is recommended. This improves speed and accuracy of searching for contact information, saves search time, and enhances image share efficiency.

## Description

### TECHNICAL FIELD

The present disclosure relates to the field of terminal technologies, and more particularly relates to a method and an apparatus for recommending contact information.

### BACKGROUND

With rapid development of terminal technologies, more and more terminals having an image share function are emerging, such as, mobile phones, tablet computers and the like. Images may be transmitted between such terminals, thereby implementing image sharing among a plurality of terminals.

For example, when a terminal A shares an image to a terminal B, terminal A may search for and select contact information corresponding to terminal B from contact information stored by terminal A itself, and afterwards, terminal A may share the image to terminal B via the contact information. However, when terminal A stores a lot of contact information, it may take a relatively long time to search for the contact information corresponding to terminal B from the stored contact information, and errors would probably occur in the searching. Therefore, a contact information recommendation method is urgently desired.

### SUMMARY

To overcome the problem in the related art, the present disclosure provides a method and an apparatus for recommending contact information.

According to a first aspect of embodiments of the present disclosure, a computer implemented method for automatically recommending contact information is provided. The method, which may be carried out at a terminal, includes:
determining an age of a mobile terminal owner;
determining, based on the age of the mobile terminal owner and stored contact photos of a plurality of contacts, a candidate contact from the plurality of contacts; and
upon receiving a share instruction with respect to a designated image, recommending contact information of the candidate contact, the designated image being any one image in a photo album to be shared.

In the embodiment of the present disclosure, an age of a mobile terminal owner is determined, a candidate contact associated with the mobile terminal owner is determined from the plurality of contacts based on the age of the mobile terminal owner and stored contact photos of a plurality of contacts; and upon receipt of a share instruction with respect to a designated image, contact information of the candidate contact is recommended. In this way, the speed and accuracy of searching for contact information are improved, the search time is saved, and the image share efficiency is enhanced.

With reference to the first aspect, in a first possible implementation manner of the first aspect, the determining an age of a mobile terminal owner includes:
acquiring a face image set of the mobile terminal owner;
performing age identification for each face image in the face image set of the mobile terminal owner, to obtain an age corresponding to each face image; and
determining the age of the mobile terminal owner based on the age corresponding to each face image.

In the embodiment of the present disclosure, the age of the mobile terminal owner is determined. In this way, a basis is provided for determining an age group of the age of a candidate contact, thereby the range of determining the candidate contact is narrowed, and the speed for determining the candidate contact is improved.

With reference to the first possible implementation manner of the first aspect, in a second possible implementation manner of the first aspect, the acquiring a face image set of the mobile terminal owner includes:
upon receiving an unlock instruction each time, capturing a face image of a trigger of the unlock instruction, to obtain a plurality of face images;
categorizing the plurality of face images to obtain a plurality of face image sets, face images in each face image set being face images of a same person; and
determining, from the plurality of face image sets, a face image set in which the number of face images is the maximum as the face image set of the mobile terminal owner.

In the embodiment of the present disclosure, the mobile terminal captures face images of a trigger of an unlock instruction; and categorizes a plurality of face images acquired via capturing; and determines, from a plurality of face image sets obtained via categorization, a face image set in which the number of face images is the maximum as the face image set of the mobile terminal owner. In this way, the range of determining the face image set of the mobile terminal owner is narrowed, and the accuracy of determining the face image set of the mobile terminal owner is improved.

With reference to the first possible implementation manner of the first aspect, in a third possible implementation manner of the first aspect, the acquiring a face image set of the mobile terminal owner includes:
acquiring self-shot face images from a stored image library;
categorizing the acquired self-shot face images to obtain a plurality of face image sets, face images in each face image set being face images of a same person; and
determining, from the plurality of face image sets, a face image set in which the number of face images is the maximum as the face image set of the mobile terminal owner.

In the embodiment of the present disclosure, the mobile terminal acquires self-shot face images from a stored image library; categorizes the acquired self-shot face images to obtain a plurality of face image sets; and determines, from the plurality of face image sets, a face image set in which the number of face images is the maximum as the face image set of the mobile terminal owner. In this way, based on the rate of appearance during the self-capturing, the range of determining the face image set of the mobile terminal owner is narrowed, and the accuracy of determining the face image set of the mobile terminal owner is improved.

With reference to the first aspect, in a fourth possible implementation manner of the first aspect, the determining, based on the age of the mobile terminal owner and stored contact photos of a plurality of contacts, a candidate contact from the plurality of contacts includes:
determining, based on the age of the mobile terminal owner, an age group of a contact associated with the photo album to be shared;
performing age identification for the stored contact photos of the plurality of contacts, to obtain the ages of the plurality of contacts; and
selecting a candidate contact from the plurality of contacts based on the ages of the plurality of contacts and the age group.

In the embodiment of the present disclosure, an age group of a contact associated with the photo album to be shared is determined, and ages of a plurality of stored contacts are determined, such that a candidate contact is quickly and effectively selected from the plurality of contacts based on the ages of the plurality of contacts and the determined age group. In this way, the range of selecting the candidate contact is narrowed, and the speed and accuracy of determining the candidate contact are improved.

With reference to the fourth possible implementation manner of the first aspect, in a fifth possible implementation manner of the first aspect, the selecting a candidate contact from the plurality of contacts based on the ages of the plurality of contacts and the age group includes:
selecting, based on the ages of the plurality of contacts and from the plurality of contacts, contacts whose ages fall within the age group; and
screening the selected contacts based on contacting frequencies of the selected contacts, to obtain a candidate contact.

In the embodiment of the present disclosure, the mobile terminal screens the selected contacts based on contacting frequencies of the selected contacts, to obtain a candidate contact; and thus determines a contact closely associated with the mobile terminal owner as the candidate contact. In this way, the accuracy of determining the candidate contact is further improved.

With reference to the fifth possible implementation manner of the first aspect, in a sixth possible implementation manner of the first aspect, the screening the selected contacts based on contacting frequencies of the selected contacts, to obtain a candidate contact includes:
determining, based on the contacting frequencies of the selected contacts, whether the selected contacts include a contact whose contacting frequency is greater than a designated frequency; and
when the selected contacts include a contact whose contacting frequency is greater than the designated frequency, determining the contact whose contacting frequency is greater than the designated frequency as a candidate contact.

In the embodiment of the present disclosure, the mobile terminal determines, based on the contacting frequencies of the selected contacts, whether the selected contacts include a contact whose contacting frequency is greater than a designated frequency; and determines the contact whose contacting frequency is greater than the designated frequency as a candidate contact, and thus determines a contact closely associated with the mobile terminal owner as the candidate contact. In this way, the accuracy of determining the candidate contact is further improved.

With reference to the sixth possible implementation manner of the first aspect, in a seventh possible implementation manner of the first aspect, after the determining, based on the contacting frequencies of the selected contacts, whether the selected contacts include a contact whose contacting frequency is greater than a designated frequency, the method further includes:
when the selected contacts do not include a contact whose contacting frequency is greater than a designated frequency, acquiring a designated number of contacts from the selected contacts according to a descending order of the contacting frequencies; and
determining the acquired contacts as candidate contacts.

In the embodiment of the present disclosure, when the selected contacts do not include a contact whose contacting frequency is greater than a designated frequency, a designated number of contacts are acquired from the selected contacts according to a descending order of the contacting frequencies; and the acquired contact is determined as a candidate contact, such that a contact closely associated with the mobile terminal owner is determined as the candidate contact. In this way, the speed and accuracy of searching for contact information are improved, and the search time is saved.

According to a second aspect of embodiments of the present disclosure, an apparatus for recommending contact information is provided. The apparatus includes:
a first determining module, configured to determine an age of a mobile terminal owner;
a second determining module, configured to determine, based on the age of the mobile terminal owner and stored contact photos of a plurality of contacts, a candidate contact from the plurality of contacts; and
a recommending module, configured to, upon receiving a share instruction with respect to a designated image, recommend contact information of the candidate contact, the designated image being any one image in a photo album to be shared.

With reference to the second aspect, in a first possible implementation manner of the second aspect, the first determining module includes:
an acquiring unit, configured to acquire a face image set of the mobile terminal owner;
a first identifying unit, configured to perform age identification for each face image in the face image set of the mobile terminal owner, to obtain an age corresponding to each face image; and
a first determining unit, configured to determine the age of the mobile terminal owner based on the age corresponding to each face image.

With reference to the first possible implementation manner of the second aspect, in a second possible implementation manner of the second aspect, the acquiring unit includes:
a shooting subunit, configured to, upon receiving an unlock instruction each time, capture a face image of a trigger of the unlock instruction, to obtain a plurality of face images;
a first categorizing subunit, configured to categorize the plurality of face images to obtain a plurality of face image sets, face images in each face image set being face images of a same person; and
a first determining subunit, configured to determine, from the plurality of face image sets, a face image set in which the number of face images is the maximum as the face image set of the mobile terminal owner.

With reference to the first possible implementation manner of the second aspect, in a third possible implementation manner of the second aspect, the acquiring unit includes:
an acquiring subunit, configured to acquire self-shot face images from a stored image library;
a second categorizing subunit, configured to categorize the acquired self-shot face images to obtain a plurality of face image sets, face images in each face image set being face images of a same person; and
a second determining subunit, configured to determine, from the plurality of face image sets, a face image set in which the number of face images is the maximum as the face image set of the mobile terminal owner.

With reference to the second aspect, in a fourth possible implementation manner of the second aspect, the second determining module includes:
a second determining unit, configured to determine, based on the age of the mobile terminal owner, an age group of a contact associated with the photo album to be shared;
a second identifying unit, configured to perform age identification for the stored contact photos of the plurality of contacts, to obtain the ages of the plurality of contacts; and
a selecting unit, configured to select a candidate contact from the plurality of contacts based on the ages of the plurality of contacts and the age group.

With reference to the fourth possible implementation manner of the second aspect, in a fifth possible implementation manner of the second aspect, the selecting unit includes:
a selecting subunit, configured to select, based on the ages of the plurality of contacts and from the plurality of contacts, contacts whose ages fall within the age group; and
a screening subunit, configured to screen the selected contacts based on contacting frequencies of the selected contacts, to obtain a candidate contact.

With reference to the fifth possible implementation manner of the second aspect, in a sixth possible implementation manner of the second aspect, the screening subunit is specifically configured to:
determine, based on the contacting frequencies of the selected contacts, whether the selected contacts include a contact whose contacting frequency is greater than a designated frequency; and
when the selected contacts include a contact whose contacting frequency is greater than the designated frequency, determine the contact whose contacting frequency is greater than the designated frequency as a candidate contact.

With reference to the sixth possible implementation manner of the second aspect, in a seventh possible implementation manner of the second aspect, the screening subunit is further specifically configured to:
when the selected contacts do not include a contact whose contacting frequency is greater than a designated frequency, acquire a designated number of contacts from the selected contacts according to a descending order of the contacting frequencies; and
determine the acquired contacts as candidate contacts.

According to a third aspect of embodiments of the present disclosure, an apparatus for recommending contact information is provided. The apparatus includes:
a processor; and
a memory for storing instructions executable by the processor;
wherein the processor is configured to:
determine an age of a mobile terminal owner;
determine, based on the age of the mobile terminal owner and stored contact photos of a plurality of contacts, a candidate contact from the plurality of contacts; and
upon receiving a share instruction with respect to a designated image, recommend contact information of the candidate contact, the designated image being any one image in a photo album to be shared.

According to a fourth aspect of embodiments of the present disclosure, there is provided a computer program which, when being executed on a processor of an apparatus, performs any one of the above methods.

The technical solutions provided in the embodiments of the present disclosure may achieve the following beneficial effects. An age of a mobile terminal owner is determined, a candidate contact is determined from the plurality of contacts based on the age of the mobile terminal owner and stored contact photos of a plurality of contacts; and upon receipt of a share instruction with respect to a designated image, contact information of the candidate contact is recommended, wherein the designated image is any one image in a photo album to be shared. In this way, the speed and accuracy of searching for contact information are improved, the search time is saved, and the image share efficiency is enhanced.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a flowchart illustrating a method for recommending contact information according to an exemplary embodiment of the present disclosure;
Fig. 2 is a flowchart illustrating another method for recommending contact information according to an exemplary embodiment of the present disclosure;
Fig. 3 is a block diagram illustrating an apparatus for recommending contact information according to an exemplary embodiment of the present disclosure;
Fig. 4 is a block diagram illustrating a first determining module according to an exemplary embodiment of the present disclosure;
Fig. 5 is a block diagram illustrating an acquiring unit according to an exemplary embodiment of the present disclosure;
Fig. 6 is a block diagram illustrating another acquiring unit according to an exemplary embodiment of the present disclosure;
Fig. 7 is a block diagram illustrating a second determining module according to an exemplary embodiment of the present disclosure;
Fig. 8 is a block diagram illustrating a selecting unit according to an exemplary embodiment of the present disclosure; and
Fig. 9 is a block diagram illustrating an apparatus for recommending contact information according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

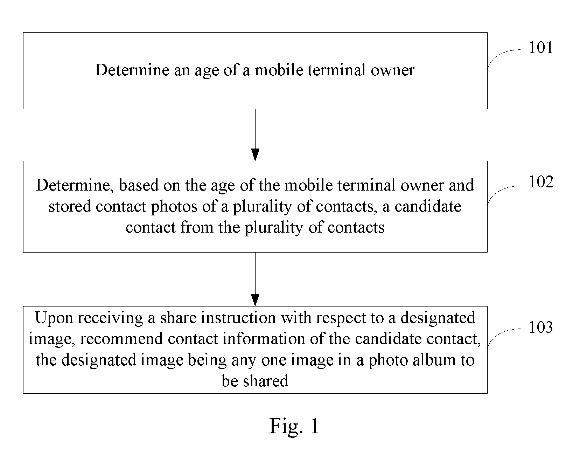

Fig. 1 is a flowchart illustrating a method for recommending contact information according to an exemplary embodiment of the present disclosure. As illustrated in Fig. 1, the method is applied in a terminal, and includes the following steps.

In step 101, an age of a mobile terminal owner is determined.

In step 102, a candidate contact is determined, based on the age of the mobile terminal owner and stored contact photos of a plurality of contacts, from the plurality of contacts.

In step 103, upon receipt of a share instruction with respect to a designated image, contact information of the candidate contact is recommended, wherein the designated image is any one image in a photo album to be shared.

In the embodiment of the present disclosure, an age of a mobile terminal owner is determined, a candidate contact is determined from the plurality of contacts based on the age of the mobile terminal owner and stored contact photos of a plurality of contacts; and upon receipt of a share instruction with respect to a designated image, contact information of the candidate contact is recommended, wherein the designated image is any one image in a photo album to be shared. In this way, the speed and accuracy of searching for contact information are improved, the search time is saved, and the image share efficiency is enhanced.

In another embodiment of the present disclosure, the determining an age of a mobile terminal owner includes:
acquiring a face image set of the mobile terminal owner;
performing age identification for each face image in the face image set of the mobile terminal owner, to obtain an age corresponding to each face image; and
determining the age of the mobile terminal owner based on the age corresponding to each face image.

In the embodiment of the present disclosure, the age of the mobile terminal owner is determined. In this way, a basis is provided for determining an age group of the age of a candidate contact, thereby the range of determining the candidate contact is narrowed, and the speed for determining the candidate contact is improved.

In another embodiment of the present disclosure, the acquiring a face image set of the mobile terminal owner includes:
upon receiving an unlock instruction each time, capturing a face image of a trigger of the unlock instruction, to obtain a plurality of face images;
categorizing the plurality of face images to obtain a plurality of face image sets, face images in each face image set being face images of a same person; and
determining, from the plurality of face image sets, a face image set in which the number of face images is the maximum as the face image set of the mobile terminal owner.

In the embodiment of the present disclosure, the mobile terminal captures face images of a trigger of an unlock instruction; and categorizes a plurality of face images acquired via shooting; and determines, from a plurality of face image sets obtained via categorization, a face image set in which the number of face images is the maximum as the face image set of the mobile terminal owner. In this way, the range of determining the face image set of the mobile terminal owner is narrowed, and the accuracy of determining the face image set of the mobile terminal owner is improved.

In another embodiment of the present disclosure, the acquiring a face image set of the mobile terminal owner includes:
acquiring self-shot face images from a stored image library;
categorizing the acquired self-shot face images to obtain a plurality of face image sets, face images in each face image set being face images of a same person; and
determining, from the plurality of face image sets, a face image set in which the number of face images is the maximum as the face image set of the mobile terminal owner.

In the embodiment of the present disclosure, the mobile terminal acquires self-shot face images from a stored image library; categorizes the acquired self-shot face images to obtain a plurality of face image sets; and determines, from the plurality of face image sets, a face image set in which the number of face images is the maximum as the face image set of the mobile terminal owner. In this way, based on the rate of appearance during the self-capturing, the range of determining the face image set of the mobile terminal owner is narrowed, and the accuracy of determining the face image set of the mobile terminal owner is improved.

In another embodiment of the present disclosure, the determining, based on the age of the mobile terminal owner and stored contact photos of a plurality of contacts, a candidate contact from the plurality of contacts includes:
determining, based on the age of the mobile terminal owner, an age group of a contact associated with the photo album to be shared;
performing age identification for the stored contact photos of the plurality of contacts, to obtain the ages of the plurality of contacts; and
selecting a candidate contact from the plurality of contacts based on the ages of the plurality of contacts and the age group.

In the embodiment of the present disclosure, an age group of a contact associated with the photo album to be shared is determined, and ages of a plurality of stored contacts are determined, such that a candidate contact is quickly and effectively selected from the plurality of contacts based on the ages of the plurality of contacts and the determined age group. In this way, the range of selecting the candidate contact is narrowed, and the speed and accuracy of determining the candidate contact are improved.

In another embodiment of the present disclosure, the selecting a candidate contact from the plurality of contacts based on the ages of the plurality of contacts and the age group includes:
selecting, based on the ages of the plurality of contacts and from the plurality of contacts, contacts whose ages fall within the age group; and
screening the selected contacts based on contacting frequencies of the selected contacts, to obtain a candidate contact.

In the embodiment of the present disclosure, the mobile terminal screens the selected contacts based on contacting frequencies of the selected contacts, to obtain a candidate contact; and thus determines a contact closely associated with the mobile terminal owner as the candidate contact. In this way, the accuracy of determining the candidate contact is further improved.

In another embodiment of the present disclosure, the screening the selected contacts based on contacting frequencies of the selected contacts, to obtain a candidate contact includes:
determining, based on the contacting frequencies of the selected contacts, whether the selected contacts include a contact whose contacting frequency is greater than a designated frequency; and
when the selected contacts include a contact whose contacting frequency is greater than the designated frequency, determining the contact whose contacting frequency is greater than the designated frequency as a candidate contact.

In the embodiment of the present disclosure, the mobile terminal determines whether the selected contacts include a contact whose contacting frequency is greater than a designated frequency; and determines the contact whose contacting frequency is greater than the designated frequency as a candidate contact, and thus determines a contact closely associated with the mobile terminal owner as the candidate contact. In this way, the accuracy of determining the candidate contact is further improved.

In another embodiment of the present disclosure, after the determining, based on the contacting frequencies of the selected contacts, whether the selected contacts include a contact whose contacting frequency is greater than a designated frequency, the method further includes:
when the selected contacts do not include a contact whose contacting frequency is greater than a designated frequency, acquiring a designated number of contacts from the selected contacts according to a descending order of the contacting frequencies; and
determining the acquired contacts as candidate contacts.

In the embodiment of the present disclosure, when the selected contacts do not include a contact whose contacting frequency is greater than a designated frequency, the mobile terminal acquires a designated number of contacts from the selected contacts according to a descending order of the contacting frequencies; and the acquired contacts are determined as candidate contacts, such that contacts closely associated with the mobile terminal owner are determined as the candidate contacts. In this way, the speed and accuracy of searching for contact information are improved, and the search time is saved.

The above optional technical solutions may be combined in any form to construct an optional embodiment of the present disclosure, which is not described herein any further.

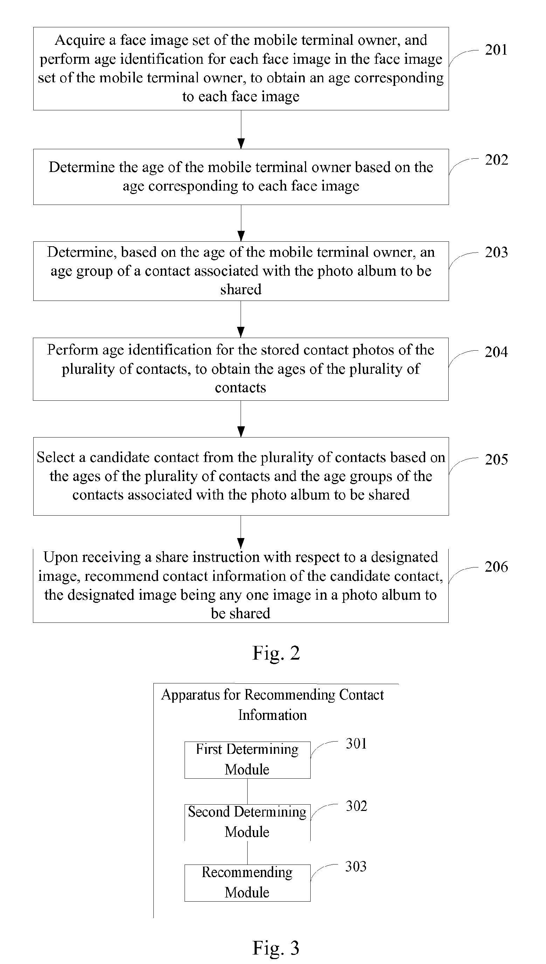

Fig. 2 is a flowchart illustrating a method for recommending contact information according to an exemplary embodiment of the present disclosure. As illustrated in Fig. 2, the method is applied in a terminal, and includes the following steps.

In step 201, a face image set of the mobile terminal owner is acquired, and age identification is performed for each face image in the face image set of the mobile terminal owner, to obtain an age corresponding to each face image.

To determine the age of the mobile terminal owner, the mobile terminal needs to firstly acquire a face image set of the mobile terminal owner. The face image set of the mobile terminal owner may be acquired in the following two manners.

In the first manner, upon receiving an unlock instruction each time, the mobile terminal captures face images of a trigger of the unlock instruction to obtain a plurality of face images; the mobile terminal categorizes the plurality of face images to obtain a plurality of face image sets, wherein face images in each face image set are face images of a same person; and the mobile terminal determines, from the plurality of face image sets, a face image set in which the number of face images is the maximum as the face image set of the mobile terminal owner.

Upon receiving an unlock instruction each time, the mobile terminal calls a camera equipped therein, and captures face images of the trigger of the unlock instruction by using the called camera, to obtain a plurality of face images. The mobile terminal groups the images of the same person, from the plurality of face images, into a face image set, and thus obtains a plurality of face image sets. However, since the trigger of the unlock instruction not only may be the mobile terminal owner, but also may be another user using the mobile terminal; whereas as compared with the other users, the number of times that the mobile terminal owner triggers the unlock instruction is the maximum, and therefore the number of shot face images of the mobile terminal owner is also the largest. To be specific, in the plurality of face image sets acquired via categorization, the face image set in which the face images of the mobile terminal owner is located includes a maximum number of face images. Therefore, the mobile terminal selects a face image set in which in which the number of face images is the maximum, and determines the selected face image set as the face image set of the mobile terminal owner.

It should be noted that the unlock instruction is used for unlocking the mobile terminal, and the unlock instruction is triggered by a user. The user may trigger unlocking of the mobile terminal by using a slide unlock button, inputting an unlock password, drawing an unlock pattern or the like operation, which is not limited in the embodiment of the present disclosure.

In addition, when the plurality of face images are categorized to obtain a plurality of face image sets, the mobile terminal may perform face identification for the plurality of face images, and group the face images of the same person into a face image set, to obtain a plurality of face image sets. The specific operation for categorizing the plurality of face images may be referenced to such relevant technologies as face recognition, which is not described in the embodiment of the present disclosure.

In a second manner, the mobile terminal acquires self-shot face images from a stored image library; categorizes the acquired self-shot face images to obtain a plurality of face image sets, wherein face images in each face image set are face images of the same person; and determines, from the plurality of face image sets, a face image set in which the number of face images is the maximum as the face image set of the mobile terminal owner.

Since the self-shot face images are generally acquired by capturing using a front camera of the mobile terminal and the pixel of the front camera is obviously lower than the pixel of the rear camera, the pixel value of a face image shot by the front camera of the mobile terminal is obviously lower than the pixel value of a face image shot by the rear camera of the mobile terminal. As such, when the mobile terminal acquires the self-shot face images from a stored image library, the mobile terminal may select a face image whose pixel value is lower than or equal to a designated pixel threshold from the image library, and determine the selected face image as a self-shot face image.

It should be noted that the designated pixel threshold may be predetermined. For example, the designated pixel threshold may be a pixel value of the front camera of the mobile terminal, or the designated pixel threshold may be an average value of pixel values of the front cameras of various currently market-available mobile terminals, or may the designated pixel threshold may be an average value of pixel values of all the face images in the image library, which is not limited in the embodiment of the present disclosure.

In addition, the specific operations for categorizing the acquired self-shot face images to obtain a plurality of face image sets, and determining a face image set in which the number of face images is the maximum as the face image set of the mobile terminal owner are similar to those in the first manner, which are not described in the embodiment of the present disclosure any further.

It should be noted that the operation for performing age identification for each face image in the face image set of the mobile terminal owner to obtain the age corresponding to each face image may be referenced to such relevant technologies as age identification technology, which is not described any further in the embodiment of the present disclosure.

In step 202, the age of the mobile terminal owner is determined based on the age corresponding to each face image.

When the mobile terminal determines the age of the mobile terminal owner based on the age corresponding to each face image, the mobile terminal may screen out a maximum age and a minimum age from the ages corresponding to all the face images, calculate an average value of the remaining ages, and determine the average value as the age of the mobile terminal owner.

For example, the face image set of the mobile terminal owner includes five face images, respectively, an image 1, an image 2, an image 3, an image 4 and an image 5; the mobile terminal performs age identification for each of the five face images to acquire that the age corresponding to the image 1 is 25, the age corresponding to the image 2 is 27, the age corresponding to the image 3 is 29, the age corresponding to the image 4 is 28, and the age corresponding to the image 5 is 34. In this case, the mobile terminal screens out the maximum age 34 and the minimum age 25 from the ages corresponding to all the five face images, calculates an average value as 28 of the remaining ages 27, 29 and 28, and determines the average age 28 as the age of the mobile terminal owner.

In addition, when the mobile terminal determines the age of the mobile terminal owner based on the age corresponding to each face image, the mobile terminal may further determine the number of face images within a designated age group based on the age corresponding to each face image and a plurality of designated age groups, and select an age group in which the number of face images is the maximum from the plurality of age groups. That is, probability distribution of face images in each designated age groups is determined, and the probability of the designated age group in which the number of face images is the maximum is the highest. Therefore, a designated age group having the highest probability may be selected from the plurality of designated age groups, and afterwards, the mobile terminal determines an average value of the ages corresponding to the face images within the designated age group as the age of the mobile terminal owner.

It should be noted that the plurality of designated age groups may be predetermined. In addition, to improve the accuracy of determining the age of the mobile terminal owner, each age group has an equal age interval. For example, the plurality of designated age group may be 18-30, 31-43, 44-56 and the like, which are not limited in the embodiment of the present disclosure. In addition, to further improve the accuracy of determining the age of the mobile terminal owner, the plurality of age groups may be defined in a finer granularity. For example, the plurality of designated age groups may be 18-25, 26-33, 34-41, 42-49, 50-57 and the like, which are not limited in the embodiment of the present disclosure.

For example, the mobile terminal determines, based on the age corresponding to each face image and the plurality of designated age groups, that is, based on the age 25 corresponding to the image 1, the age 27 corresponding to the image 2, the age 29 corresponding to the image 3, the age 28 corresponding to the image 4 and the age 34 corresponding to the image 5, and the plurality of designated age groups 18-25, 26-33, 34-41, 42-49 and 50-57, that the number of face images corresponding to the age group 18-25 is 1, the number of face images corresponding to the age group 26-33 is 3, the number of face images corresponding to the age group 34-41 is 1, and the numbers of face images corresponding to the age groups 42-49 and 50-57 are both 0. Therefore, the mobile terminal selects the age group 26-33 in which the number of face images is the maximum from the plurality of designated age groups, determines that an average value of ages 27, 28 and 29 corresponding to the image 2, the image 3 and the image 4 within the designated age group 26-33 is 28, and determines the average value 28 as the age of the mobile terminal owner.

Nevertheless, in practical application, when the mobile terminal determines the age of the mobile terminal owner based on the age corresponding to each face image, the mobile terminal may further determine the age of the mobile terminal owner in other manners, which is not limited in the embodiment of the present disclosure.

In step 203, an age group of a contact associated with the photo album to be shared is determined based on the age of the mobile terminal owner.

To determine information of a candidate contact based on age groups of contacts associated with the photo album to be shared, and thus to narrow the range of determining the candidate contact from a plurality of stored contacts and improve the speed of determining the candidate contact, the mobile terminal needs to determine the age group of the contacts associated with the photo album to be shared based on the age of the mobile terminal owner. The operation of determining by the mobile terminal the age group of the contacts associated with the photo album to be shared based on the age of the mobile terminal owner may be specifically as follows: the mobile terminal determines photo album attributes of the photo album to be shared, determines the contacts associated with the photo album to be shared, acquires a corresponding age difference range from a stored corresponding relationship between the photo album attributes, contacts and age difference range, and superposes the age of the mobile terminal owner and the age difference range, that is, adding the age of the mobile terminal owner and the maximum value within the age difference range, to obtain the maximum value within the age group within which the ages of the contacts associated with the photo album to be shared fall. Afterwards, the mobile terminal adds the age of the mobile terminal owner and the minimum value within the age difference range to obtain the minimum value within the age group of the ages of the contacts associated with the photo album to be shared, and thus determines the age group within which the ages of the contacts associated with the photo album to be shared fall.

The photo album attributes of the photo album to be shared may be determined by photo album name, age corresponding to the face image in the photo album to be shared and the like. In addition, the photo album attributes of the photo album to be shared are used for identifying a family relationship between the photo album to be shared and the mobile terminal owner. Further, when the mobile terminal determines the contacts associated with the photo album to be shared, the mobile terminal may acquire a corresponding contact from a stored corresponding relationship between photo album attributes and contacts based on the photo album attributes of the photo album to be shared, and determine the acquired contact as a contact associated with the photo album to be shared.

For example, assume that the age of the mobile terminal owner is 28, the photo album attribute of the photo album to be shared is a baby's photo album, and the contacts associated with the photo album to be shared are grandfather, grandmother, maternal grandfather and maternal grandmother of the contact. Then, based on the baby's photo album, the contacts, i.e., grandfather, grandmother, maternal grandfather and maternal grandmother of the contact, associated with the photo album to be shared, the mobile terminal acquires, from a corresponding relationship between photo album attributes, contacts and age difference ranges as listed in Table 1, a corresponding age difference range [20, 30]; adds the age 28 of the mobile terminal owner to the maximum value 30 within the age difference range to obtain a maximum value 58 of the age group within which the ages of the contacts associated with the photo album to be shared fall; adds the age 28 of the mobile terminal owner to the minimum value 20 within the age difference range to obtain a minimum value 48 of the age group within which the ages of the contacts associated with the photo album to be shared fall; and thus determines that the age group within which the ages of the contacts associated with the photo album to be shared fall is [48, 58].

**Table 1**

| Photo album attribute | Contact | Range of age difference |
|---|---|---|
| Baby's photo album | grandfather, grandmother, maternal grandfather, maternal grandmother | [20, 30] |
| Parents' photo album | brothers, sisters | [0, 5] |
| ...... | ...... | ...... |

It should be noted that in the embodiment of the present disclosure, description is given only using the corresponding relationship between photo album attributes, contacts and age difference ranges listed in Table 1 as an example. However, Table 1 causes no limitation to the embodiment of the present disclosure.

In step 204, age identification is performed for the stored contact photos of the plurality of contacts, to obtain the ages of the plurality of contacts.

At present, when the mobile terminal stores contact information, contact photos of the contacts may be stored in the mobile terminal. Therefore, the mobile terminal may acquire the contact photos of a plurality of contacts, and perform age identification for the acquired plurality of contact photos to obtain the ages of the plurality of contacts.

For example, if the number of contacts is 5, and the plurality of contacts are respectively a contact 1, a contact 2, a contact 3, a contact 4 and a contact 5, the mobile terminal performs age identification for the stored contact photos of the plurality of contacts to acquire that the age of the contact 1 is 20, the age of the contact 2 is 36, the age of the contact 3 is 49, the age of the contact 4 is 51, and the age of the contact 5 is 55.

It should be noted that the operation of performing age identification for the contact photos of the plurality of contacts to obtain the ages of the plurality of contacts is similar to the operation for performing age identification in step 201 for each face image in the face image set of the mobile terminal owner, which may be both referenced to such relevant technologies as age identification technology. Therefore, this embodiment gives no detailed description herein any further.

In step 205, a candidate contact is selected from the plurality of contacts based on the ages of the plurality of contacts and the age group of the contacts associated with the photo album to be shared.

To recommend the contact information and improve the image share efficiency when a designated image is shared, the mobile terminal may select a candidate contact form the plurality of contacts based on the ages of the plurality of contacts and the age group of the contacts associated with the photo album to be shared. The operation for selecting by the mobile terminal a candidate contact from the plurality of contacts based on the ages of the plurality of contacts and the age group of the contacts associated with the photo album to be shared may be as follows: Based on the ages of the plurality of contacts, the mobile terminal selects, from the plurality of contacts, contacts whose ages fall within the age group of the contacts associated with the photo album to be shared; and then screens the selected contacts based on contacting frequencies of the selected contacts, to obtain a candidate contact.

That is, based on the ages of the plurality of contacts, the mobile terminal selects, from the plurality of contacts, contacts whose ages fall within the age group of the contacts associated with the photo album to be shared. Since there may be multiple selected contacts, to further improve the accuracy of determining the candidate contact, the mobile terminal may screen the selected contacts based on contacting frequencies of the selected contacts to obtain a candidate contact.

For example, based on the ages of the plurality of contacts and the age group, that is, the age 20 of the contact 1, the age 36 of the contact 2, the age 49 of the contact 3, the age 51 of the contact 4 and the age 55 of the contact 5, and the age group [48, 58], the mobile terminal selects, from the plurality of contacts, the contacts 3, 4 and 5 whose ages fall within the age group [48, 58]; and then the mobile terminal screens the selected contacts based on the contacting frequencies of the selected contact 3, contact 4 and contact 5, to obtain a candidate contact.

The operation for screening by the mobile terminal the selected contacts based on contacting frequencies of the selected contacts to obtain a candidate contact may be as follows: the mobile terminal determines, based on the contacting frequencies of the selected contacts, whether the selected contacts include a contact whose contacting frequency is greater than a designated frequency; and when the selected contacts include a contact whose contacting frequency is greater than the designated frequency, the mobile terminal determines the contact whose contacting frequency is greater than the designated frequency as a candidate contact. The contacting frequency is indicative of how frequently contact occurs between the user and the selected contacts, and may be determined using one or more of phone calls and text messages, for example.

That is, the mobile terminal acquires the number of contacting times of a selected contact within a first designated time duration, calculates a ratio of the number of contacting times to the first designated time duration, and determines the ratio as a contacting frequency of the selected contact. The mobile terminal determines, based on the contacting frequencies of the selected contacts, whether the selected contacts include a contact whose contacting frequency is greater than a designated frequency, and if the selected contacts includes a contact whose contacting frequency is greater than the designated frequency, determine the contact whose contacting frequency is greater than the designated frequency in the selected contacts as the candidate contact.

It should be noted that the number of contacting times of the selected contact within the first designated time duration may be at least one of the number of conversation times and the number of short message times, or may be contacting times of other applications used for communication, which is not limited in the embodiment of the present disclosure. The first designated time duration may be predefined. For example, the first designated time duration may be 30 days, 50 days, 60 days or the like, which is likewise not limited in the embodiment of the present disclosure.

In addition, the designated frequency may be predefined. For example, the designated frequency may be 2, 3 or the like, which is not limited in the embodiment of the present disclosure.

For example, if the first designated time duration is 30 days, the designated frequency is 2, the mobile terminal acquires that within the first designated time duration, the number of contacting times of the contact 3 is 36, the number of contacting times of the contact 4 is 30 and the number of contacting times of the contact 5 is 6, and calculates a ratio of the number of contacting times of each contact to the first designated time duration to obtain a contacting frequency 1.2 of the contact 3, a contacting frequency 1 of the contact 4 and a contacting frequency 0.2 of the contact 5. In this case, the mobile terminal determines, based on the contacting frequencies of the selected contacts, that the selected contact 3, contact 4 and contact 5 include no contact whose contacting frequency is greater than the designated frequency of 2.

Further, when the selected contacts do not include a contact whose contacting frequency is greater than a designated frequency, the mobile terminal acquires a designated number of contacts from the selected contacts according to a descending order of the contacting frequencies; and determines the acquired contacts as the candidate contacts.

For example, if the designated number is 2, when the mobile terminal determines, based on the contacting frequencies of the selected contacts, that the selected contact 3, contact 4 and contact 5 include no contact whose contacting frequency is greater than the designated frequency 2, the mobile terminal acquires, from the selected contacts, two contacts, i.e., the contact 3 and the contact 4 according to a descending order of the contacting frequencies, and determines the acquired contact 3 and contact 4 as the candidate contacts.

Further, when the mobile terminal screens the selected contacts based on the contacting frequencies of the selected contacts to obtain one or more candidate contacts, to reduce the complexity of determining the candidate contact, the mobile terminal may also directly screen the selected contacts based on the acquired contacting frequencies of the selected contacts within the first designated time duration, to obtain the candidate contact. The operation for screening by the mobile terminal the selected contacts based on the contacting frequencies of the selected contacts within the first designated time duration to obtain the candidate contact is similar to the above operation for screening the selected contacts based on the contacting frequencies of the selected contact to obtain the candidate contact, which is thus not described any further in the embodiment of the present disclosure.

In step 206, upon receipt of a share instruction with respect to a designated image, contact information of the candidate contact is recommended, wherein the designated image is any one image in a photo album to be shared.

When the designated image is shared, in order to improve the speed of searching for contact information to be shared from the stored plurality of contact information, upon receiving the share instruction with respect to the designated image, the mobile terminal may recommend the contact information of the candidate contact, such that a user directly selects the contact information from the contact information of the candidate contact. In this way, the designated image is shared.

When the mobile terminal recommends the contact information of the candidate contact, the mobile terminal may automatically pop up the contact information of the candidate contact. For more quicker and more effective selection of the contact information from the contact information of the candidate contact, the popped up contact information may only include the name of the candidate contact and contact information with on need of displaying other information such as contact photo, Email, address, and the like.

It should be noted that the share instruction with respect to the designated image is used for sharing the designated image, and the share instruction with respect to the designated image is triggered by the user through a designated operation. The designated operation may be a click operation, a slide operation, a voice operation, or the like, which is not limited in the embodiment of the present disclosure.

For example, when the designated image is any one image in a baby's photo album, since the candidate contact is a contact associated with the photo album to be shared, to enhance contacting frequency among family members in the photo album to be shared, and improve the speed of searching for contact information to be shared from the stored plurality of contact information, upon receiving the share instruction with respect to the designated image, the mobile terminal may recommend the contact information of the candidate contact, that is, the mobile terminal may recommend the contact information of grandfather, grandmother, maternal grandfather, maternal grandmother, and the like of the baby, such that the user directly selects the contact information of the family members from the contact information of the candidate contact. In this way, the designated image is shared.

Further, when the mobile terminal needs to share a plurality of images in the baby's photo album, the mobile terminal may separately select the plurality of images from the baby's photo album. Upon receiving an image confirmation instruction, the mobile terminal may simultaneously share the selected plurality of images to improve the efficiency of sharing the plurality of images.

It should be noted that the image confirmation instruction is used for confirming that the plurality of images are successfully selected, and the image confirmation instruction is triggered by the user through an operation such as, clicking an acknowledge button, clicking an enter key, a clicking send key, or the like. The designated operation may be a click operation, a slide operation, a voice operation, or the like, which is not limited in the embodiment of the present disclosure.

Further, since a time sequence that the candidate contact is determined through steps 201 to 205 is prior to receiving the share instruction with respect to the designated image, the mobile terminal does not need to repeatedly perform steps 201 to 205 each time the image is shared, which improves the speed of sharing the images. In the process of determining the candidate contact through steps 201 to 205, a face image of an unlock instruction trigger is shot, or the images in the image library may be updated at any time. Specifically, the mobile terminal captures a new face image, or the user deletes or adds the image in the image library at any time. In addition, since contacting frequency of the contact is variable, in order to update the candidate contact without delay to improve the accuracy of determining the candidate contact and cause no heavy burden to the mobile terminal, the mobile terminal may periodically update the candidate contacts through steps 201 to 205.

It should be noted that the length of a period for updating the candidate contact may be a second designated duration, and the second designated duration may be predefined. For example, the second designated duration may be one week, two weeks, one month or the like. Nevertheless, the mobile terminal may also determine to update the candidate contacts once when the updated number of face images shot from the unlock instruction trigger or the updated number of images in the image library is a first value, for example, the first value may be 10, 20 or the like; or the mobile terminal may also determine to update the candidate contacts once when a change rate of contacting frequency of the contact is a second value. The change rate of contacting frequency is a change rate between the contacting frequency within a previous period and the contacting frequency at the current time. That is, a difference between the contacting frequency within a previous period and the contacting frequency at the current time is divided by a time difference between the previous period and the current time, for example, the second value may be 0.5, 1, 2 or the like, which is not limited in the embodiment of the present disclosure.

Further, the mobile terminal may not only recommend a candidate contact based on the method for recommending contact information in steps 201 to 206, but also determine a candidate contact in real time upon receiving a share instruction with respect to a designated image, and recommend the determined candidate contact. To be specific, upon receiving a share instruction with respect to a designated image, the mobile terminal determines an age of a mobile terminal owner, determines, based on the age of the mobile terminal owner and stored contact photos of a plurality of contacts, the candidate contact from the plurality of contacts, and recommends the contact information of the candidate contact, which improves the accuracy of determining the candidate contact.

According to the above-described methods, upon receipt of a share instruction with respect to a designated image, candidate contact is determined and then contact information of the determined candidate contact is recommended. Although the candidate contact may be determined in real time and the accuracy of determining the candidate contact is better improved, a heavy burden may be caused to the mobile terminal since the candidate contact is re-determined each time an image is shared. Therefore, during sharing of images, optionally, the contact information of the candidate contact is recommended by using the methods provided in steps 201 to 206.

In the embodiment of the present disclosure, the mobile terminal determines an age of a mobile terminal owner, selects a contact associated with the photo album to be shared from the plurality of contacts based on the age of the mobile terminal owner and stored contact photos of a plurality of contacts, and determines the candidate contact based on the contacting frequency of the selected contact. In this way, upon receiving the share instruction with respect to the designated image, the mobile terminal recommends the contact information of the candidate contact, which improves the speed and accuracy of searching for the contact information, saves search time, and improves the image share efficiency.

Fig. 3 is a block diagram illustrating an apparatus for recommending contact information according to an exemplary embodiment of the present disclosure. Referring to Fig. 3, the apparatus includes: a first determining module 301, a second determining module 302, and a recommending module 303.

The first determining module 301 is configured to determine an age of a mobile terminal owner.

The second determining module 302 is configured to determine, based on the age of the mobile terminal owner and stored contact photos of a plurality of contacts, a candidate contact from the plurality of contacts.

The recommending module 303 is configured to, upon receiving a share instruction with respect to a designated image, recommend contact information of the candidate contact, the designated image being any one image in a photo album to be shared.

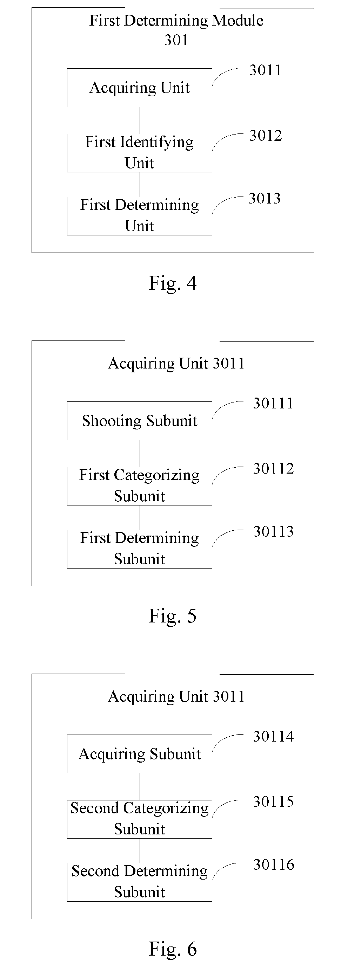

In another embodiment of the present disclosure, referring to Fig. 4, the first determining module 301 includes: an acquiring unit 3011, a first identifying unit 3012, and a first determining unit 3013.

The acquiring unit 3011 is configured to acquire a face image set of the mobile terminal owner.

The first identifying unit 3012 is configured to perform age identification for each face image in the face image set of the mobile terminal owner, to obtain an age corresponding to each face image.

The first determining unit 3013 is configured to determine the age of the mobile terminal owner based on the age corresponding to each face image.

In another embodiment of the present disclosure, referring to Fig. 5, the acquiring unit 3011 includes: a shooting subunit 30111, a first categorizing subunit 30112, and a first determining subunit 30113.

The shooting subunit 30111 is configured to, upon receiving an unlock instruction each time, capture a face image of a trigger of the unlock instruction, to obtain a plurality of face images.

The first categorizing subunit 30112 is configured to categorize the plurality of face images to obtain a plurality of face image sets, face images in each face image set being face images of a same person.

The first determining subunit 30113 is configured to determine, from the plurality of face image sets, a face image set in which the number of face images is the maximum as the face image set of the mobile terminal owner.

In another embodiment of the present disclosure, referring to Fig. 6, the acquiring unit 3011 includes: an acquiring subunit 30114, a second categorizing subunit 30115, and a second determining subunit 30116.

The acquiring subunit 30114 is configured to acquire self-shot face images from a stored image library.

The second categorizing subunit 30115 is configured to categorize the acquired self-shot face images to obtain a plurality of face image sets, face images in each face image set being face images of a same person.

The second determining subunit 30116 is configured to determine, from the plurality of face image sets, a face image set in which the number of face images is the maximum as the face image set of the mobile terminal owner.

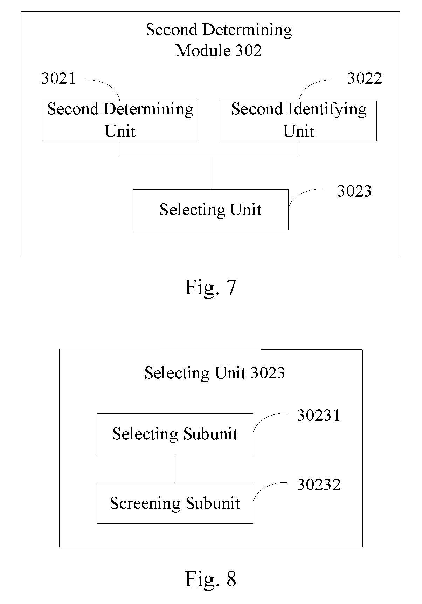

In another embodiment of the present disclosure, referring to Fig. 7, the second determining module 302 includes: a second determining unit 3021, a second identifying unit 3022, and a selecting unit 3023.

The second determining unit 3021 is configured to determine, based on the age of the mobile terminal owner, an age group of a contact associated with the photo album to be shared.

The second identifying unit 3022 is configured to perform age identification for the stored contact photos of the plurality of contacts, to obtain the ages of the plurality of contacts.

The selecting unit 3023 is configured to select a candidate contact from the plurality of contacts based on the ages of the plurality of contacts and the age group.

In another embodiment of the present disclosure, referring to Fig. 8, the selecting unit 3023 includes a selecting subunit 30231 and a screening subunit 30232.

The selecting subunit 30231 is configured to select, based on the ages of the plurality of contacts and from the plurality of contacts, contacts whose ages fall within the age group.

The screening subunit 30232 is configured to screen the selected contacts based on contacting frequencies of the selected contacts, to obtain a candidate contact.

In another embodiment of the present disclosure, the screening subunit 30232 is specifically configured to:
determine, based on the contacting frequencies of the selected contacts, whether the selected contacts include a contact whose contacting frequency is greater than a designated frequency; and
when the selected contacts include a contact whose contacting frequency is greater than the designated frequency, determine the contact whose contacting frequency is greater than the designated frequency as a candidate contact.

In another embodiment of the present disclosure, the screening subunit 30232 is further specifically configured to:
when the selected contacts do not include a contact whose contacting frequency is greater than a designated frequency, acquire a designated number of contacts from the selected contacts according to a descending order of the contacting frequencies; and
determine the acquired contacts as candidate contacts.

In the embodiments of the present disclosure, an age of a mobile terminal owner is determined, a candidate contact is determined from the plurality of contacts based on the age of the mobile terminal owner and stored contact photos of a plurality of contacts; and upon receipt of a share instruction with respect to a designated image, contact information of the candidate contact is recommended, wherein the designated image is any one image in a photo album to be shared. In this way, the speed and accuracy of searching for contact information are improved, the search time is saved, and the image share efficiency is enhanced.

With respect to the apparatuses in the above embodiments, the specific implementations of operations executed by various modules thereof have been described in detail in the embodiments illustrating the methods, which are not described herein any further.

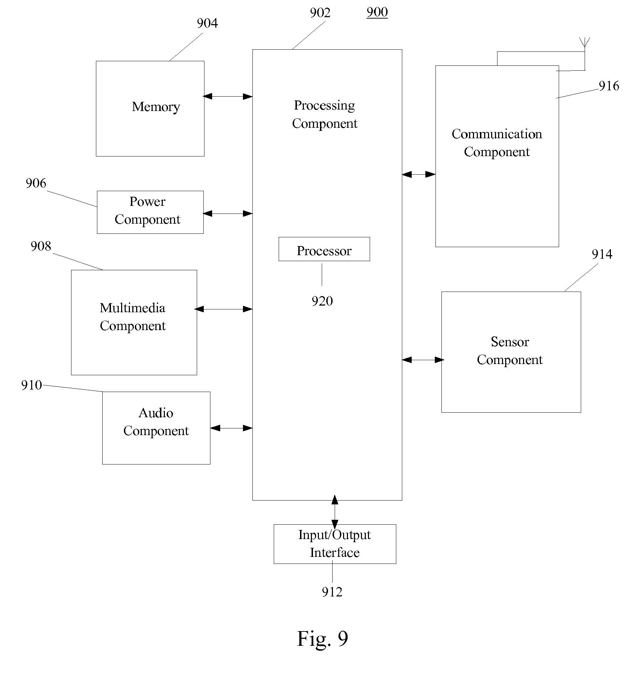

Fig. 9 is a block diagram illustrating an apparatus 900 for recommending contact information according to an exemplary embodiment of the present disclosure. For example, the apparatus 900 may be a mobile phone, a computer, a digital broadcast terminal, a messaging device, a gaming console, a tablet, a medical device, exercise equipment, a personal digital assistant, and the like.

Referring to Fig. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 920 to execute instructions to perform all or a part of the steps in the above-described methods. In addition, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operations of the apparatus 900. Examples of such data include instructions for any application or method operated on the apparatus 900, contact data, phonebook data, messages, pictures, videos, and the like. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power supplies, and other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive external multimedia data when the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, or a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and a peripheral interface module, such as a keyboard, a click wheel, a button, or the like. The buttons may include, but are not limited to, a home button, a volume button, a starting button, and a locking button.

The sensor component 914 includes one or more sensors to provide status assessments of various aspects of the apparatus 900. For example, the sensor component 914 may detect an open/closed status of the apparatus 900, relative positioning of components, e.g., the display and the keypad, of the apparatus 900; the sensor component 914 may further detect a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate wired or wireless communications between the apparatus 900 and other devices. The apparatus 900 may access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 904, executable by the processor 920 in the apparatus 900, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

A non-transitory computer-readable storage medium is provided. When instructions stored in the storage medium are executed by a processor of a mobile terminal, the mobile terminal is caused to perform a method for recommending contact information, wherein the method includes:
determining an age of a mobile terminal owner;
determining, based on the age of the mobile terminal owner and stored contact photos of a plurality of contacts, a candidate contact from the plurality of contacts; and
upon receiving a share instruction with respect to a designated image, recommending contact information of the candidate contact, the designated image being any one image in a photo album to be shared.

In another embodiment of the present disclosure, the determining an age of a mobile terminal owner includes:
acquiring a face image set of the mobile terminal owner;
performing age identification for each face image in the face image set of the mobile terminal owner, to obtain an age corresponding to each face image; and
determining the age of the mobile terminal owner based on the age corresponding to each face image.

In another embodiment of the present disclosure, the acquiring a face image set of the mobile terminal owner includes:
upon receiving an unlock instruction each time, capturing a face image of a trigger of the unlock instruction, to obtain a plurality of face images;
categorizing the plurality of face images to obtain a plurality of face image sets, face images in each face image set being face images of a same person; and
determining, from the plurality of face image sets, a face image set in which the number of face images is the maximum as the face image set of the mobile terminal owner.

In another embodiment of the present disclosure, the acquiring a face image set of the mobile terminal owner includes:
acquiring self-shot face images from a stored image library;
categorizing the acquired self-shot face images to obtain a plurality of face image sets, face images in each face image set being face images of a same person; and
determining, from the plurality of face image sets, a face image set in which the number of face images is the maximum as the face image set of the mobile terminal owner.

In another embodiment of the present disclosure, the determining, based on the age of the mobile terminal owner and stored contact photos of a plurality of contacts, a candidate contact from the plurality of contacts includes:
determining, based on the age of the mobile terminal owner, an age group of a contact associated with the photo album to be shared;
performing age identification for the stored contact photos of the plurality of contacts, to obtain the ages of the plurality of contacts; and
selecting a candidate contact from the plurality of contacts based on the ages of the plurality of contacts and the age group.

In another embodiment of the present disclosure, the selecting a candidate contact from the plurality of contacts based on the ages of the plurality of contacts and the age group includes:
selecting, based on the ages of the plurality of contacts and from the plurality of contacts, contacts whose ages fall within the age group; and
screening the selected contacts based on contacting frequencies of the selected contacts, to obtain a candidate contact.

In another embodiment of the present disclosure, the screening the selected contacts based on contacting frequencies of the selected contacts, to obtain a candidate contact includes:
determining, based on the contacting frequencies of the selected contacts, whether the selected contacts include a contact whose contacting frequency is greater than a designated frequency; and
when the selected contacts include a contact whose contacting frequency is greater than the designated frequency, determining the contact whose contacting frequency is greater than the designated frequency as a candidate contact.

In another embodiment of the present disclosure, after the determining, based on the contacting frequencies of the selected contacts, whether the selected contacts include a contact whose contacting frequency is greater than a designated frequency, the method further includes:
when the selected contacts do not include a contact whose contacting frequency is greater than a designated frequency, acquiring a designated number of contacts from the selected contacts according to a descending order of the contacting frequencies; and
determining the acquired contacts as candidate contacts.

In the embodiments of the present disclosure, an age of a mobile terminal owner is determined, a candidate contact is determined from the plurality of contacts based on the age of the mobile terminal owner and stored contact photos of a plurality of contacts; and upon receipt of a share instruction with respect to a designated image, contact information of the candidate contact is recommended, wherein the designated image is any one image in a photo album to be shared. In this way, the speed and accuracy of searching for contact information are improved, the search time is saved, and the image share efficiency is enhanced.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and examples be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A computer implemented method for recommending contact information, comprising:
determining (101) an age of a mobile terminal owner;
determining (102), based on the age of the mobile terminal owner and stored contact photos of a plurality of contacts, a candidate contact from the plurality of contacts; and
upon receiving a share instruction with respect to a designated image, recommending (103, 206) contact information of the candidate contact, the designated image being any one image in a photo album to be shared.

2. The method according to claim 1, wherein the determining (101) an age of a mobile terminal owner comprises:
acquiring (201) a face image set of the mobile terminal owner;
performing age identification for each face image in the face image set of the mobile terminal owner, to obtain an age corresponding to each face image; and
determining (202) the age of the mobile terminal owner based on the age corresponding to each face image.

3. The method according to claim 2, wherein the acquiring (201) a face image set of the mobile terminal owner comprises:
upon receiving an unlock instruction, capturing a face image, the capturing being triggered by the unlock instruction, to obtain a plurality of face images;
categorizing the plurality of face images to obtain a plurality of face image sets, face images in each face image set being face images of a same person; and
determining, from the plurality of face image sets, a face image set having the highest number of face images as the face image set of the mobile terminal owner.

4. The method according to claim 2, wherein the acquiring (201) a face image set of the mobile terminal owner comprises:
acquiring self-shot face images from a stored image library;
categorizing the acquired self-shot face images to obtain a plurality of face image sets, face images in each face image set being face images of a same person; and
determining, from the plurality of face image sets, a face image set having the highest number of face images as the face image set of the mobile terminal owner.

5. The method according to any preceding claim, wherein the determining (102), based on the age of the mobile terminal owner and stored contact photos of a plurality of contacts, a candidate contact from the plurality of contacts comprises:
determining (203), based on the age of the mobile terminal owner, an age group of a contact associated with the photo album to be shared;
performing (204) age identification for the stored contact photos of the plurality of contacts, to obtain the ages of the plurality of contacts; and
selecting (205) a candidate contact from the plurality of contacts based on the ages of the plurality of contacts and the age group.

6. The method according to claim 5, wherein the selecting (205) a candidate contact from the plurality of contacts based on the ages of the plurality of contacts and the age group comprises:
selecting, based on the ages of the plurality of contacts and from the plurality of contacts, contacts whose ages fall within the age group; and
screening the selected contacts based on contacting frequencies of the selected contacts to obtain a candidate contact, the contacting frequencies indicating how frequently contact occurs with the selected contacts.

7. The method according to claim 6, wherein the screening the selected contacts based on contacting frequencies of the selected contacts, to obtain a candidate contact comprises:
determining, based on the contacting frequencies of the selected contacts, whether the selected contacts comprise a contact whose contacting frequency is greater than a designated frequency; and
when the selected contacts comprise one or more contacts whose contacting frequencies are greater than the designated frequency, determining the contacts whose contacting frequencies are greater than the designated frequency as a candidate contact.

8. The method according to claim 7, wherein after the determining, based on the contacting frequencies of the selected contacts, whether the selected contacts comprise a contact whose contacting frequency is greater than a designated frequency, the method further comprises:
when the selected contacts do not comprise a contact whose contacting frequency is greater than a designated frequency, acquiring a designated number of contacts from the selected contacts according to a descending order of the contacting frequencies; and
determining the acquired contacts as candidate contacts.

9. An apparatus for recommending contact information, comprising:
a first determining module (301), configured to determine an age of a mobile terminal owner;
a second determining module (302), configured to determine, based on the age of the mobile terminal owner and stored contact photos of a plurality of contacts, a candidate contact from the plurality of contacts; and
a recommending module (303), configured to, upon receiving a share instruction with respect to a designated image, recommend contact information of the candidate contact, the designated image being any one image in a photo album to be shared.

10. The apparatus according to claim 9, wherein the first determining module (301) comprises:
an acquiring unit (3011), configured to acquire a face image set of the mobile terminal owner;
a first identifying unit (3012), configured to perform age identification for each face image in the face image set of the mobile terminal owner, to obtain an age corresponding to each face image; and
a first determining unit (3013), configured to determine the age of the mobile terminal owner based on the age corresponding to each face image.

11. The apparatus according to claim 10, wherein the acquiring unit (3011) comprises:
a shooting subunit (30111), configured to, upon receiving an unlock instruction, capturing a face image, the capturing being triggered by the unlock instruction, to obtain a plurality of face images;
a first categorizing subunit (30112), configured to categorize the plurality of face images to obtain a plurality of face image sets, face images in each face image set being face images of a same person; and
a first determining subunit (30113), configured to determine, from the plurality of face image sets, a face image set having the highest number of face images as the face image set of the mobile terminal owner.

12. The apparatus according to claim 10, wherein the acquiring unit (3011) comprises:
an acquiring subunit (30114), configured to acquire self-shot face images from a stored image library;
a second categorizing subunit (30115), configured to categorize the acquired self-shot face images to obtain a plurality of face image sets, face images in each face image set being face images of a same person; and
a second determining subunit (30116), configured to determine, from the plurality of face image sets, a face image set in which the number of face images is the maximum as the face image set of the mobile terminal owner.

13. The apparatus according to any of claims 9 to 12, wherein the second determining module (302) comprises:
a second determining unit (3021), configured to determine, based on the age of the mobile terminal owner, an age group of a contact associated with the photo album to be shared;
a second identifying unit (3022), configured to perform age identification for the stored contact photos of the plurality of contacts, to obtain the ages of the plurality of contacts; and
a selecting unit (3023), configured to select a candidate contact from the plurality of contacts based on the ages of the plurality of contacts and the age group;
wherein the selecting unit (3023) comprises:
a selecting subunit (30231), configured to select, based on the ages of the plurality of contacts and from the plurality of contacts, contacts whose ages fall within the age group; and
a screening subunit (30232), configured to screen the selected contacts based on contacting frequencies of the selected contacts, to obtain a candidate contact, the contacting frequencies indicating how frequently contact occurs with the selected contacts;
wherein the screening subunit (30232) is specifically configured to:
determine, based on the contacting frequencies of the selected contacts, whether the selected contacts comprise a contact whose contacting frequency is greater than a designated frequency; and
when the selected contacts comprise one or more contacts whose contacting frequencies are greater than the designated frequency, determine the contacts whose contacting frequencies are greater than the designated frequency as candidate contacts; and
wherein the screening subunit (30232) is specifically configured to:
when the selected contacts do not comprise a contact whose contacting frequency is greater than a designated frequency, acquire a designated number of contacts from the selected contacts according to a descending order of the contacting frequencies; and
determine the acquired contacts as candidate contacts.

14. An apparatus for recommending contact information, comprising:
a processor (920); and
a memory (904) for storing instructions executable by the processor (920);
wherein the processor (920) is configured to carry out the method of any of claims 1 to 8.

15. A computer program which, when executed on one or more processors of an apparatus, causes the apparatus to perform a method according to any one of claims 1 to 8.
